# EUROPEAN PATENT SPECIFICATION

(11) **EP 1 754 039 B1**
(45) Date of publication and mention of the grant of the patent: **31.08.2016**
(21) Application number: 05750590.1
(22) Date of filing: 09.06.2005
(51) Int. Cl.: B01L 3/00, G01N 35/08, G01N 35/10, G01N 1/20

(54) **FLOW CELL WITH CONTINUOUSLY CIRCULATING FLUID**
DURCHFLUSSZELLE MIT KONTINUIERLICH ZIRKULIERENDER FLÜSSIGKEIT
CUVE A CIRCULATION AVEC FLUIDE CIRCULANT EN CONTINU

(30) Priority: 09.06.2004 SE 0400899
(43) Date of publication of application: 21.02.2007
(73) Proprietor: Envic-Sense AB, 721 30 Västerås (SE)
(72) Inventor: GÅRDHAGEN, Eva-Lena, S-713 93 Nora (SE); GÅRDHAGEN, Peter, S-713 93 Nora (SE)
(74) Representative: Awapatent AB
(86) International application number: PCT/SE2005/000870
(87) International publication number: WO 2005/121744

(56) References cited:
- EP-A2- 0 848 242
- WO-A1-96/15447
- WO-A1-2004/001392
- US-A- 4 115 235
- US-A- 4 119 120
- US-A- 4 950 610
- US-A- 5 783 740
- US-B1- 6 528 018
- SCHUCK P. ET AL: 'Determination of Binding Constants by Equilibrium Titration with Circulating Sample in a Surface Plasmon Resonance Biosensor' ANALYTICAL BIOCHEMISTRY vol. 265, 1998, pages 79 - 91, XP002333786

## Description

### Field of invention

The present invention relates to a detection system, a detection device and a detection method for detecting a substance in a fluid, utilising a first and a second loop for fluid.

### Background of invention

There are applications where very small amounts of particular substances have to be detected or measured. It may e.g. be narcotics, explosives, or parts of deoxyribonucleic acid (DNA).

In Schuck, P. et al, "Determination of Binding Constants by Equilibrium Titration with Circulating Sample in a Surface Plasmon Resonance Biosensor", Analytical Biochemistry 265, pp. 79-91 (1998), is a contious loop wherein a sample flows disclosed. The sample is injected into a sample inlet whereupon it enters a first microchannel, flows through a sample chamber which include a microanalytical device, and exits the sample chamber through a second microchannel. The sample then goes through a pump and is re-circulated through the first microchannel and back into the sample chamber.

A problem with this solution is that it is sensitive to disturbances. One example is temperature dependencies of the microanalythical device. Another is electromagnetic influence on the microanalythical device. This implies a further problem. To reduce the effects of disturbances, a long time period is used for the analysis to allow the system to stabilize in order to get a reliable result. It is therefore a problem with prior art solutions that they do not provide an analysis apparatus that gives a swift reliable result and is operable for field use. Furhter, a problem with prior art is the size of the equipment, which makes it impossible to use in a portable analysis apparatus. A further problem with prior art is maintenance requirements on the equipment, where parts that have been in contact with the sample have to be cleaned, which is a delicate task for these type of analysis apparatuses.

### Summary of the invention

It is therefore an object of the present invention to provide an improved analysis of prescence of substances.

The above object is obtained according to a first aspect of the present invention by detection system for substances in a fluid, comprising a detection device, a driving circuit for said detection device, and a processing unit. In one embodiment the presentinvention is a detection device for substance in a fluid, comprising a body comprising a cavity,
a sensor located in said cavity, a first and a second conduit connected to said cavity, a third conduit connecting said first and second conduits such that said first conduit, said cavity, said second conduit and said third conduit form a first loop, and a fourth conduit connecting said first and second conduits such that said first conduit, said cavity, said second conduit and said fourth conduit form a second loop, wherein valves are arranged to direct a flow of said fluid either through said first loop or said second loop,and
a pump for providing said flow in said fluid characterised in that said pump, which is a cylinder rotating around its axis, is employing shear forces of the fluid in contact with the pump for providing said flow. In one embodiment said fourth conduit comprises an input for inputting samples. In another embodiment said fourth conduit comprises an output for excess fluid. In another embodiment said pump comprises a cylinder located such that a part of said cylinder is located in one of said first or second conduits, wherein an axis of said cylinder is perpendicular to said conduit. In another embodiment said sensor is a crystal microbalance sensor. In another embodiment the detection device is arranged to measure said substance. In another embodiment the detection device is arranged to be disposable. In another embodiment said sensor is sensitive to mercury. In another embodiment the detection device comprises a plurality of sensors, wherein each of said sensors are arranged to detect a certain substance.

An effect of this is that only a small amount of fluid is needed in the system, which implies that concentration of sought substances is increased, implying faster results, and/or that smaller samples can be used. Another effect is that disturbances are decreased since the detection device can be built compact, thus leading to shorter fluid paths with a more homogenous environment.

An advantage of this is an improved analysis with less disturbances, faster results, and enabling use of smaller samples.

The fourth conduit may comprise an input for inputting samples, and the fourth conduit may comprise an output for excess fluid. Effects of these features are that insertion of samples can be made in a loop that is not involved in the fluid flow during insertion, and that the pressure in the cavity of the detection device can be kept constant, which implies faster stabilisation after insertion of the sample. An advantage of this is fast and accurate results. A particular feature is that further samples may be input to accumulate sought substance in the detection device, thereby improving detection.

The detection device may further comprise a pump for providing the flow in the fluid. The pump may comprise a cylinder located such that a part of said cylinder is located in one of said first or second conduits, wherein an axis of said cylinder is perpendicular to said conduit. An effect of this is provision of flow through the loops with constant pressure at a low cost. An advantage of this is less disturbance and/or lower costs.

The sensor may be a crystal microbalance sensor, or an optical sensor.

The detection system may further comprise a second detection device and a second driving circuit for said second detection device, wherein said second detection device is arranged to provide a reference value. An effect of this is that the system is able to compensate for use in different environments. An advantage of this is that the system is suitable for field use.

The detection system may further be arranged to measure the substance. The substance may be measured in an absolute quantity, given in e.g. mole or gram, or relative quantity, e.g. molarity or grams per litre.

The detection device may be disposable. An advantage of this is that there is no need for cleaning the apparatus between use, since the only part in contact with the sample is the detection device. Since cleaning of analysis apparatuses normally are time consuming, expensive and degrades performance of sensitivity, this is truly advantageous and is made possible since the structure of the detection device makes it cheap enough to be disposable.

The detection device may comprise a plurality of such detection devices, each being sensitive to different substances. The plurality of detection devices can be arranged as arrays. An advantage of this is that a plurality of substances can be detected at the same time.

The detection device may be sensitive to mercury.

The above object is obtained according to a second aspect of the present invention by a detection device for substance in a fluid, comprising a body comprising a cavity,a sensor located in said cavity, a first and a second conduit connected to said cavity, a third conduit connecting said first and second conduits such that said first conduit, said cavity, said second conduit and said third conduit form a first loop, and a fourth conduit connecting said first and second conduits such that said first conduit, said cavity, said second conduit and said fourth conduit form a second loop, wherein valves are arranged to direct a flow of said fluid either through said first loop or said second loop, and a pump for providing said flow in said fluid characterised in that said pump, which is a cylinder rotating around its axis, is employing shear forces of the fluid in contact with the pump for providing said flow.

The effects and advantages of the second aspect of the present invention are similar to those of the first aspect.

The above object is obtained according to a third aspect of the present invention by a method of detecting substance in fluid samples in a detection device comprising a body comprising a cavity, a sensor located in said cavity, a first and a second conduit connected to said cavity, a third conduit connecting said first and second conduits such that said first conduit, said cavity, said second conduit and said third conduit form a first loop, and a fourth conduit connecting said first and second conduits such that said first conduit, said cavity, said second conduit and said fourth conduit form a second loop, wherein valves are arranged to direct a flow of said fluid either through said first loop or said second loop, and a pump for providing said flow in said fluid, wherein said fourth conduit comprises an input for inputting samples, comprising the steps of:
circulating a fluid through said first loop by directing said flow with said valves;
receiving a sample through said input;
redirecting said flow with said valves such that fluid is circulated through said second loop; and
registering a value of said sensor characterised by providing, by said pump, said flow in said fluid by employing shear forces of the fluid in contact with said pump.
An effect of this is that insertion of samples can be made in a loop that is not involved in the fluid flow during insertion, and that the pressure in the cavity of the detection device can be kept constant, which implies faster stabilisation after insertion of the sample. Another effect of this is that only a small amount of fluid is needed in the system, which implies that concentration of sought substance is increased, and/or that smaller samples can be used. Further another effect is that disturbances are decreased since the detection device can be built compact, thus leading to shorter fluid paths with a more homogenous environment. An advantage of this is fast and accurate results.

The method may further comprise measuring the substance.

An effect of this is that the value represent the amount of substance in the sample. An advantage of this is that a measure of the sought substance is provided.

The method may further comprise the steps of:
registering a second value of a second detection device; and
generating an output value in dependence on said first value and said second value.

An effect of this is that the analysis is ability to compensate for use in different environments. An advantage of this is that the method is suitable for field use.

The method may further comprise inputting a second fluid free from said substance in said second detection device.

An effect of this is that differences in e.g. fluid densities can be compensated. An advantage of this is even more accurate detection and measuring.

The first and second values may be frequencies and said generation step may comprise mixing said frequencies, and the output value is a frequency comprising the difference in frequencies obtained through said mixing.

An effect of this is a simple, cheap and accurate comparison of the values. An advatage of this is low costs and accurate values.

The sample may be received from a syringe.

The method may comprise the step of disposing the detection device after detection. An advantage of this is that there is no need for cleaning the apparatus between use, since the only part in contact with the sample is the detection device. Since cleaning of analysis apparatuses normally are time consuming, expensive, and degrades performance of sensitivity, this is truly advantageous, and is made possible since the structure of the detection device makes it cheap enough to be disposable.

The method may comprise the step of detecting a plurality of different substances. This can be done either with a plurality of detection devices according to the second aspect of the present invention e.g. arranged in arrays, or with a detection device according to the second aspect of the present invention, comprising a plurality of sensors, or any combination thereof. An advantage of this is that a multitude of substances can be detected simultaneously.

The method may comprise the step of detecting mercury.

### Brief description of the drawings

The above, as well as additional objects, features and advantages of the present invention, will be better understood through the following illustrative and non-limiting detailed description of preferred embodiments of the present invention, with reference to the appended drawings, wherein:
Fig. 1 is a sectional drawing of a detection device according to the present invention;
Fig. 2 is a sectional view taken along the line A-A in Fig. 1;
Fig. 3 is a sectional view taken along the line B-B in Fig. 1;
Fig. 4 is a sectional view taken along the line C-C in Fig. 1;
Fig. 5 is a side view of the detection device;
Fig. 6 shows a detection system according to one embodiment of the present invention;
Fig. 7 shows a detection system according to another embodiment of the present invention;
Fig. 8 is a flow chart of a method according to one embodiment of the present invention; and
Fig. 9 is a flow chart of a method according to another embodiment of the present invention.

### Detailed description of the preferred embodiments

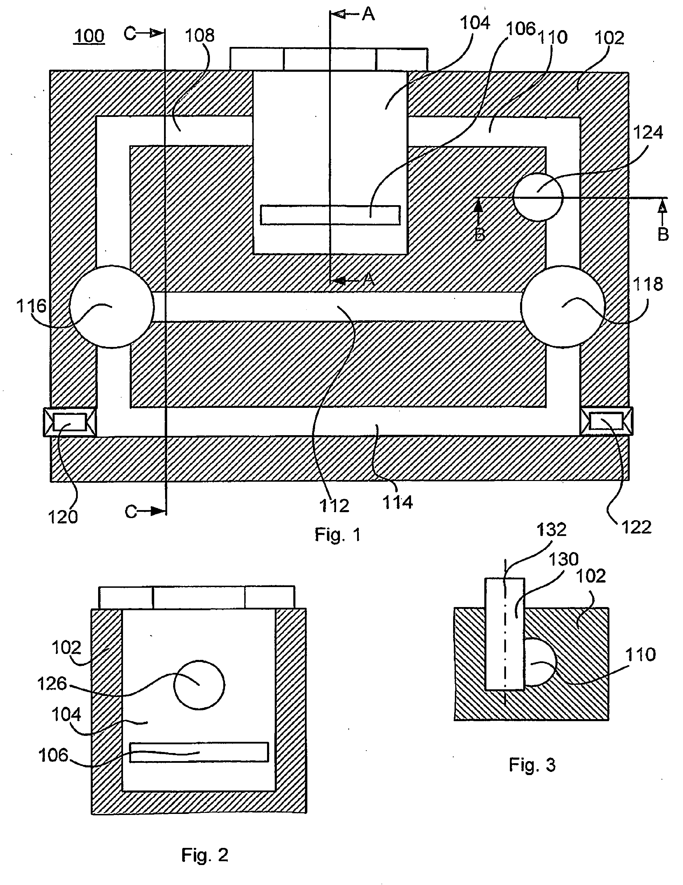

Fig. 1 is a sectional drawing of a detection device 100 according to the present invention. The detection device 100 comprises a body 102 in which a cavity 104 is located. A sensor 106 is located in the cavity 104. A first conduit 108 in the body 102 is connected to an input of the cavity 104, and a second conduit 110 is connected to an output of the cavity 104. Fig. 2 is a sectional view taken along the line A-A, showing the cavity 104 comprised in the body 102, and the sensor 106 in the cavity 104. Here, the input 126 of the cavity 104 is depicted.

Returning to Fig. 1, a third conduit 112 connects the first and second conduits 108, 110 such that the first conduit 108, the cavity 104, the second conduit 110 and the third conduit 112 form a first loop. A fourth conduit 114 connects the first and second conduits 108, 110 such that the first conduit 108, the cavity 104, the second conduit 110 and the fourth conduit 114 form a second loop. The detection device 100 comprises a first valve 116 arranged between the first, third and fourth conduits 108, 112, 114. The detection device 100 also comprises a second valve 118 arranged between the second, third and fourth conduits 110, 112, 114. The valves 116, 118 are arranged to direct a flow either through said first loop or said second loop. The fourth conduit 114 comprises an input 120 for inputting samples, and an output 122 for excess fluid. The detection device 100 further comprises a pump 124. Fig. 3 is a sectional view taken along the line B-B, showing the pump 124 of Fig. 1. The pump 124 comprises a cylinder 130 located such that a part of the cylinder 130 is located in the conduit 110. An axis 132 of the cylinder 130 is preferably perpendicular to the conduit 110.

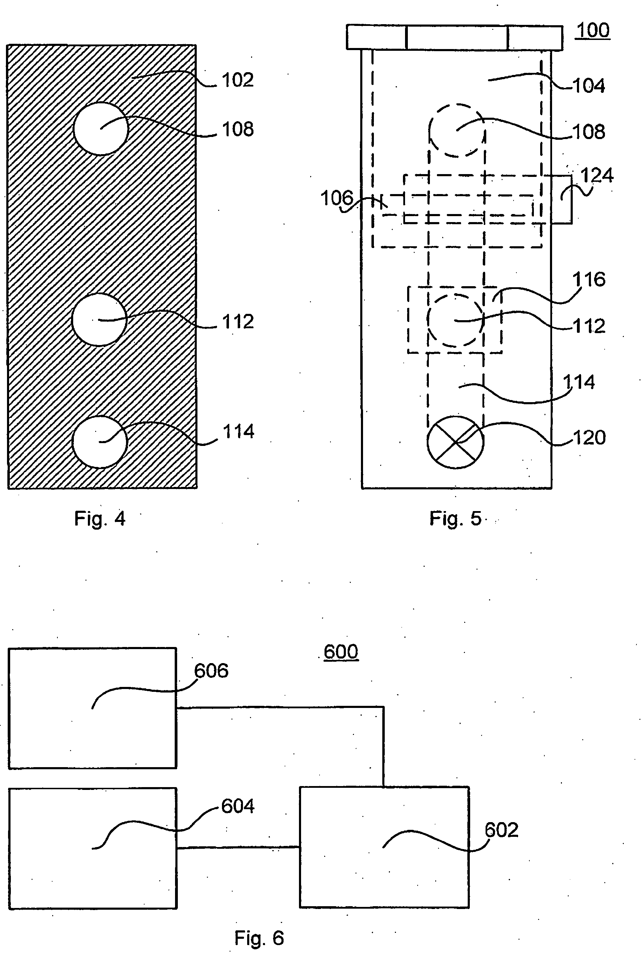

Fig. 4 is a sectional view taken along the line C-C, showing the first, third and fourth conduits 108, 112, 114 in the body 102. Fig. 5 is a side view of the detection device 100.

Initially, the fluid is continously circulated in the first loop. This is performed by the pump 124. To get as small pressure changes as possible, the pump, which essentially is a cylinder 130 rotating around its axis 132, is employing shear forces of the fluid which is in contact with a part of the cylinder. Since the detection device 100 and its conduits 108, 110, 112, 114 is small, this is enough for producing a flow in the first or second loop. Further it produces no pressure changes. Pressure changes would otherwise affect the sensor.

A sample is input through the input 120, e.g. injected by a microsyringe, of the fourth conduit 114. Since this conduit 114 is not in fluid flow contact with the cavity 104, any pressure or temperature changes during sample input do not affect the sensor 106. The excess fluid of the fourth conduit 114 is output through the output 122, which preferably comprises a pressure balancing valve. The amount of sample fluid is small, especially compared to the size of the body 102. Therefore, the temperature of the sample stabilises quickly to the same level as the rest of the fluid. Thus, the pressure and temperature of the fluid comprising the sample in the fourth conduit 114 is the same as the fluid circulating in the first loop. Then the valves 116, 118 are switched to direct the flow through the second loop. Thus, the sample is driven through the second loop to the cavity 104 and the sensor 106, and is then re-circulated in the second loop such that the sensor 106 is exposed to the sample enough for providing a proper detection, or a measured value.

Since the conduits 108, 110, 112, 114 can be made small, and the integration of the cavity 104, the pump 124, the conduits 108, 110, 112, 114, and the sample injection part enable a small detection device, which enables a small amount of used fluid in the detection device 100. Thus, the amount of sample can be very small, especially since the sample is re-circulated and exposed to the sensor 106 a multitude of times.

The structure of the detection device enables a solution that is small size, robust, and relatively cheap. These features implies the possibility of making the detection device disposable, i.e. the detection device is used in the analysis apparatus once, and is then disposed and replaced with a new. An effect of this is that cleaning is no longer necessary, since the sample is only in contact with the detection device, and not with the rest of the equipment.

The sensors can be of quartz crystal microbalancing type, surface plasmon resonance type, or of electrochemical type. Sensors using biocathalysis or bioaffinity can be used. For example, the output signals of the sensors can represent the sensor values by a frequency, a current, pulse width, pulse counts, wavelength, intensity, phase shift, reflection angle or a voltage, depending on the choice of sensor, the way of driving the sensor, and the measured or detected substance. For example, the sensors can be driven by electrical signals, e.g. voltages, currents, pulses or frequencies, or light signals, e.g. from a laser or a light emitting diode. Preferably, the sensor value is converted to an electrical signal to enable electrical signal processing. However, an optical signal can also be processed, and can be preferred in environments comprising disturbing electromagnetic fields.

The sensor 106 can be a quartz crystal microbalance (QCM) sensor. A substrate of the sensor is provided with a first substance, e.g. antibodies, that either binds the measured substance of the sample, i.e. weight gain sensors, or is released upon contact with the measured substance, i.e. weight loss sensors. When the weight of the first substance changes, the resonance frequency of the sensor changes, and a detection or measurement can be made.

The term detection can also comprise measuring the substance in the fluid comprising the sample to obtain a value representing a quantity of the substance. The quantity may be an absolute quantity, given in e.g. mole or gram, or relative quantity, e.g. molarity or grams per litre. For example, in a QCM sensor, detection is performed by detecting a changed resonance frequency of the sensor, and a measure of the amount of sought substance in the sample is given as a function of the frequency change.

Fig. 6 shows a detection system 600 according to one embodiment of the present invention. The detection system 600 comprises a detection device 602, which is driven by a driving circuit 604. The driving circuit 604 comprises, e.g. in the case of using a quartz crystal microbalancing sensor in the detection device, an oscillator. The detection system also comprises a processing unit 606. The processing unit 606 receives an output signal from the sensor of the detection device 602, and produces an output signal indicative of detected or measured substance in the sample. The processing unit can also comprise means for recording detections and/or measurements, calibration and compensation means, and interfaces towards equipment such as display, printer, computer network, etc. The driving circuitry 604 and the processing unit 606 are depicted as two devices. However, this is for explanatory purpose, and the driving circuitry 604 and the processing unit can be one unit, or divided upon a plurality of units.

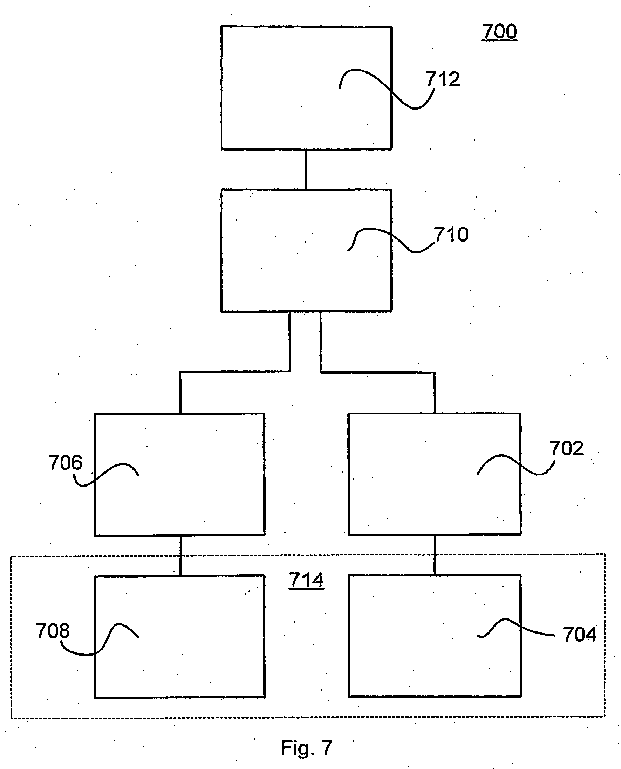

Fig. 7 shows a detection system 700 according to a further embodiment of the present invention. The detection system 700 comprises a first detection device 702, which is driven by a first driving circuit 704. The detection system 700 further comprises a second detection device 706 and a second driving circuit 708. The sample is injected in the first detection device 702, and a first output is provided as described above. The second detection device 706 is identically driven, by the second driving circuit 706, as the first detection device 702. However, no sample is injected in the second detection device 706. The sensor of the second detection device 706 provides a second output, which gives no detection of the sought substance, but will give information about present disturbances, such as electromagnetic fields, temperature and pressure changes, etc. The first and second outputs are processed by a first processing circuit 710 to find only the information that emanates from the detection of the presence and measurement of the sought substance. Thus, a compensated signal is generated to provide higher accuracy and/or sensitivity. For example, when quartz crystal microbalancing sensors are used, a frequency change of the output of the sensor of the first detection device 702 is to be detected and measured. However, frequency changes on the output of the sensor of the second detection device 706 is not emanating from any detected substance. Thus, an assumption is made that the same frequency changes of the first device 702 is not emanating from detection of the sought substance, and only the difference in frequency between the devices 702, 706 emanates from real detection. This difference can be provided by mixing the two outputs in the first processing unit 710 and low pass filtering the mixed signals. Thus, a signal is provided, with a frequency that is the frequency difference.between the outputs of the devices 702, 706. This frequency is output to a second processing unit 712, which thus receives an output signal of the first processing unit 710 indicative of a detected or measured substance in the sample. The second processing unit 712 can also comprise means for recording detections and/or measurements, calibration and compensation means, and interfaces towards equipment such as display, printer, computer network, etc.

The driving circuitries 704, 708 can preferably be located in one common driving circuitry unit 714. The driving circuitries 704, 708, and the first and second processing units 710, 712 are depicted as four devices. However, this is for explanatory purpose, and the driving circuitries 704, 708 and the processing units 710, 712 can as well be one unit, or divided upon a plurality of units.

The first processing unit 710 has been described to compare frequencies, but depending on the choice of sensors, the first processing unit 710 can compare voltage levels, currents, optical signals etc., or perform advanced digital or analog signal processing to provide an output that is representative of the detected or measured substance.

The sensors can be of quartz crystal microbalancing (QCM) type, surface plasmon resonance type, or of electrochemical type. Sensors using biocathalysis or bioaffinity can be used.

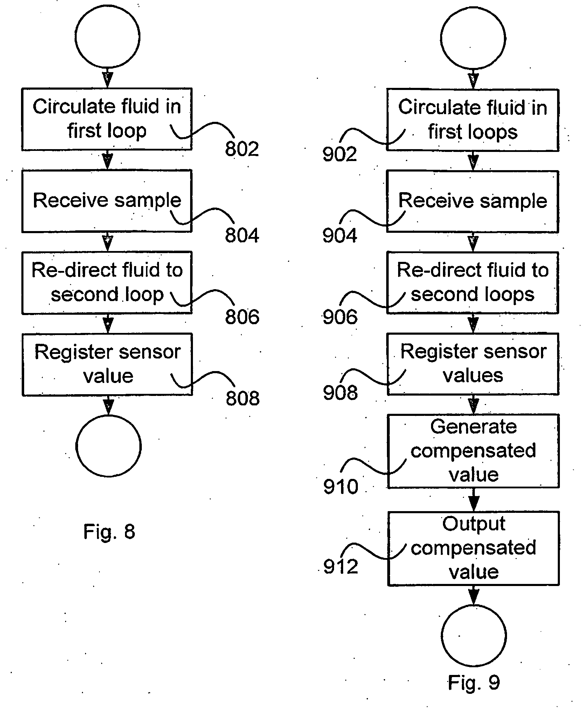

Fig. 8 is a flow chart of a method according to an embodiment of the present invention. In a first loop circulation step 802, a fluid is circulated in a first loop comprising a first conduit, a cavity comprising a sensor, a second conduit, and a third conduit. This circulation continues during a sample reception step 804 where a sample is injected into a fourth conduit. No circulation is present in the fourth conduit during the sample reception step 804, and the sample remain in the fourth conduit until a re-direction step 806, when the fluid flow is re-directed to a second loop comprising the first conduit, the cavity, the second conduit, and the fourth conduit. Thereby, the sample is circulated and will pass the cavity and, thus, the sensor repeatedly. A sensor value output by the sensor, e.g. an optical or electrical signal, can thus be registered in a sensor value registration step 808. The output of the sensor, i.e. the sensor value, can be interpreted to detect presence or measure the amount of sought substance in the sample. More or less signal procesing can be applied to the signal representing the sensor value to achieve an accurate result. For example, the signal can represent the sensor value by a frequency, a current, pulse width, pulse counts, wavelength, intensity, phase shift, reflection angle, or voltage, depending on the choice of sensor, the way of driving the sensor, and the measured or detected substance. One or more sensors, of the same type or of different type, can be used simultaneously, and one or more substances can be detected or measured.

Fig. 9 is a flow chart of a method according to another embodiment of the present invention. In a first loop circulation step 902, fluid is circulated in a first loop of each of two detection devices, each loop comprising a first conduit, a cavity comprising a sensor, a second conduit, and a third conduit. This circulation continues during a sample reception step 904 where a sample is injected into a fourth conduit of the first detection device. No sample is input in the second detection device, since this device is used as a reference. No circulation is present in the fourth conduit during the sample reception step 904, and the sample remain in the fourth conduit until a re-direction step 906, when the circulation of fluid is re-directed to a second loop comprising the first conduit, the cavity, the second conduit, and the fourth conduit. In the second detection device, the fluid can be circulated in the first loop all the time, or for achieving a reference value for effects of re-direction, the fluid of the second device can be re-directed into the second loop simultaneously as of the first device. Thereby, the sample is circulated in the first device and will pass the cavity and thus the sensor of the first device repeatedly. Sensor values output by the sensors of the first and second devices can thus be registered in a sensor value registration step 908. A compensated signal is generated in dependence on the sensor value outputs, e.g. the sensor values are compared in a compensated output value generation step 910 to enable elimination of signal components from the sensor of the first device that do not represent a detection or measurement of a sought substance. Other types of processing can be performed, e.g. multiplication, correlation, convolution etc. An output of a compensated value in an output step 912 can be interpreted to detect presence or measure the amount of sought substance in the sample. More or less signal procesing can be applied to the signal representing the sensor values and the compensated value to achieve an accurate result. For example, the signals can represent the sensor values by a frequency, a current, pulse width, pulse counts, wavelength, intensity, phase shift, reflection angle or voltage, depending on the choice of sensor, the way of driving the sensor, and the measured or detected substance. One or more sensors, of the same type or of different types, can be used in each device simultaneously, and one or more substances can be detected or measured simultaneously. For example, a detection device can comprise a plurality of sensors arranged, functionally, virtually, or actually, in an array, where different cells of the matrix detects a certain substance. Alternatively, or also, a plurality of detection devices can be arranged in a matrix to obtain a similar or improved result.

## Claims

1. A detection device (100) for substance in a fluid, comprising a body (102) comprising a cavity (104),
a sensor (106) located in said cavity (104),
a first and a second conduit (108, 110) connected to said cavity (104),
a third conduit (112) connecting said first and second conduits (108, 110) such that said first conduit (108), said cavity (104), said second conduit (110) and said third conduit (112) form a first loop,
and a fourth conduit (114) connecting said first and second conduits (108, 110) such that said first conduit (108), said cavity (104), said second conduit (110) and said fourth conduit (114) form a second loop,
wherein valves (116, 118) are arranged to direct a flow of said fluid either through said first loop or said second loop,and
a pump (124) for providing said flow in said fluid
**characterised in that**
said pump (124), which is a cylinder rotating around its axis, is employing shear forces of the fluid in contact with the pump for providing said flow.

2. The detection device (100) according to claim 1, wherein said fourth conduit (114) comprises an input (120) for inputting samples.

3. The detection device according to claim 1, wherein said fourth conduit (114) comprises an output (122) for excess fluid.

4. The detection device (100) according to claim 1, wherein said pump (124) comprises a cylinder (130) located such that a part of said cylinder (130) is located in one of said first or second conduits (108, 110), wherein an axis (132) of said cylinder (130) is perpendicular to said conduit (108, 110).

5. The detection device (100) according to any of claims 1 - 4, wherein said sensor (106) is a crystal microbalance sensor.

6. The detection device (100) according to any of claims 1 - 5, arranged to measure said substance.

7. The detection device (100) according to any of claims 1 - 6, arranged to be disposable.

8. The detection device (100) according to any of claims 1 - 7, wherein said sensor (106) is sensitive to mercury.

9. The detection device (100) according to any of claims 1 - 8, comprising a plurality of sensors (106), wherein each of said sensors (106) are arranged to detect a certain substance.

10. A detection system (600) for substances in a fluid, comprising a detection device (602) according to any of the claims 1-9, a driving circuit (604) for said detection device (602), and a processing unit (606).

11. The detection system (700) according to claim 10, comprising a plurality of detection devices (702, 706), wherein each of said detection devices are sensitive to different substances.

12. The detection system according to any of claims 10 - 11, wherein said detection device comprises a plurality of sensors, each sensitive to a certain substance.

13. The detection system according any of claims 10 - 12, wherein said detection device is sensitive to mercury.

14. A method of detecting substance in fluid samples in a detection device (100) comprising a body (102) comprising a cavity (104), a sensor (106) located in said cavity (104), a first and a second conduit (108, 110) connected to said cavity (104), a third conduit (112) connecting said first and second conduits (108, 110) such that said first conduit (108), said cavity (104), said second conduit (110) and said third conduit (112) form a first loop, and a fourth conduit (114) connecting said first and second conduits (108, 110) such that said first conduit (108), said cavity (104), said second conduit (110) and said fourth conduit (114) form a second loop, wherein valves (116, 118) are arranged to direct a flow of said fluid either through said first loop or said second loop, and
a pump (124) for providing said flow in said fluid, wherein said fourth conduit comprises an input (120) for inputting samples,
comprising the steps of:
circulating (802) a fluid through said first loop by directing said flow with said valves;
receiving (804) a sample through said input;
redirecting (806) said flow with said valves such that fluid is circulated through said second loop; and
registering (808) a value of said sensor
**characterised by**
providing, by said pump, which is a cylinder rotating around its axis, said flow in said fluid by employing shear forces of the fluid in contact with said pump.

15. The method according to claim 14, further comprising measuring said substance.

16. The method of detecting according to claim 14 or 15, further comprising the steps of:
registering a second value of a second detection device; and
generating an output value in dependence on said first value and said second value.

17. Method of detecting according to claim 16, further comprising inputting a second fluid free from said substance in said second detection device.

18. The method of detecting according to claim 16 or 17, wherein said first and second values are frequencies and said generation step comprises mixing said frequencies, and said output value is a frequency comprising the difference in frequencies obtained through said mixing.

19. Method of detecting according to any of claims 14 - 18, wherein said sample is received from a syringe.

20. The method of detecting according to any of claims 14 - 19, further comprising the step of disposing said detection device after detection.

21. The method of detecting according to any of claims 14 - 20, further comprising the step of detecting mercury.

22. The method of detecting according to any of claims 14 - 21, further comprising the step of detecting a plurality of different substances.

## Patentansprüche

1. Detektierungsvorrichtung (100) für Substanz in einem Fluid, umfassend einen Körper (102), umfassend einen Hohlraum (104), einen Sensor (106), der in dem Hohlraum (104) angeordnet ist,
eine erste und eine zweite Rohrleitung (108, 110), die mit dem Hohlraum (104) verbunden sind,
eine dritte Rohrleitung (112), die die erste und die zweite Rohrleitung (108, 110) verbindet, so dass die erste Rohrleitung (108), der Hohlraum (104), die zweite Rohrleitung (110) und die dritte Rohrleitung (112) eine erste Schleife bilden,
und eine vierte Rohrleitung (114), die die erste und zweite Rohrleitung (108, 110) so verbindet, dass die erste Rohrleitung (108), der Hohlraum (104), die zweite Rohrleitung (110) und die vierte Rohrleitung (114) eine zweite Schleife bilden, wobei Ventile (116, 118) vorgesehen sind, um einen Fluss des Fluids entweder durch die erste Schleife oder die zweite Schleife zu lenken, und
eine Pumpe (124) zum Bereitstellen des Flusses des Fluids, **dadurch gekennzeichnet, dass**
die Pumpe (124), die ein um seine Achse rotierender Zylinder ist, Scherkräfte des Fluids in Kontakt mit der Pumpe verwendet, um den Fluss bereitzustellen.

2. Detektierungsvorrichtung (100) nach Anspruch 1, wobei die vierte Rohrleitung (114) einen Eingang (120) zum Eingeben von Proben umfasst.

3. Detektierungsvorrichtung nach Anspruch 1, wobei die vierte Rohrleitung (114) einen Ausgang (122) für überschüssiges Fluid umfasst.

4. Detektierungsvorrichtung (100) nach Anspruch 1, wobei die Pumpe (124) einen Zylinder (130) umfasst, der so angeordnet ist, dass ein Teil des Zylinders (130) in einer von der ersten oder zweiten Rohrleitung (108, 110) angeordnet ist, wobei eine Achse (132) des Zylinders (130) senkrecht zu der Rohrleitung (108, 110) ist.

5. Detektierungsvorrichtung (100) nach einem der Ansprüche 1-4, wobei der Sensor (106) ein Kristallmikrowaagensensor ist.

6. Detektierungsvorrichtung (100) nach einem der Ansprüche 1-5, die zum Messen der Substanz vorgesehen ist.

7. Detektierungsvorrichtung (100) nach einem der Ansprüche 1-6, die als Wegwerfprodukt vorgesehen ist.

8. Detektierungsvorrichtung (100) nach einem der Ansprüche 1-7, wobei der Sensor (106) auf Quecksilber empfindlich ist.

9. Detektierungsvorrichtung (100) nach einem der Ansprüche 1-8, umfassend eine Vielzahl von Sensoren (106), wobei jeder der Sensoren (106) zum Detektieren einer bestimmten Substanz vorgesehen ist.

10. Detektierungssystem (600) für Substanzen in einem Fluid, umfassend eine Detektierungsvorrichtung (602) gemäß einem der Ansprüche 1-9, einen Treiberschaltkreis (604) für die Detektierungsvorrichtung (602) und eine Verarbeitungseinheit (606).

11. Detektierungssystem (700) nach Anspruch 10, umfassend eine Vielzahl von Detektierungsvorrichtungen (702, 706), wobei jede der Detektierungsvorrichtungen auf unterschiedliche Substanzen empfindlich ist.

12. Detektierungssystem nach einem der Ansprüche 10-11, wobei die Detektierungsvorrichtung eine Vielzahl von Sensoren umfasst, wovon jede auf eine bestimmte Substanz empfindlich ist.

13. Detektierungssystem nach einem der Ansprüche 10-12, wobei die Detektierungsvorrichtung auf Quecksilber empfindlich ist.

14. Verfahren zum Detektieren von Substanz in Fluidproben in einer Detektierungsvorrichtung (100), umfassend einen Körper (102), umfassend einen Hohlraum (104), einen Sensor (106), der in dem Hohlraum (104) angeordnet ist, eine erste und eine zweite Rohrleitung (108, 110), die mit dem Hohlraum (104) verbunden sind, eine dritte Rohrleitung (112), die die erste und zweite Rohrleitung (108, 110) so verbindet, dass die erste Rohrleitung (108), der Hohlraum (104), die zweite Rohrleitung (110) und die dritte Rohrleitung (112) eine erste Schleife bilden, und eine vierte Rohrleitung (114), die die erste und zweite Rohrleitung (108, 110) so verbindet, dass die erste Rohrleitung (108), der Hohlraum (104), die zweite Rohrleitung (110) und die vierte Rohrleitung (114) eine zweite Schleife bilden, wobei Ventile (116, 118) so vorgesehen sind, dass sie einen Fluss des Fluids entweder durch die erste Schleife oder die zweite Schleife lenken, und
eine Pumpe (124) zur Bereitstellung des Flusses in dem Fluid, wobei die vierte Rohrleitung einen Eingang (120) zur Eingabe von Proben umfasst, umfassend die Schritte:
Zirkulieren (802) eines Fluids durch die erste Schleife durch Lenken des Flusses mit den Ventilen;
Empfangen (804) einer Probe durch den Eingang;
Umleiten (806) des Flusses mit den Ventilen, so dass Fluid durch die zweite Schleife zirkuliert wird; und
Registrieren (808) eines Werts des Sensors, **dadurch gekennzeichnet, dass**
durch die Pumpe, die ein um seine Achse rotierender Zylinder ist, der Fluss in dem Fluid bereitgestellt wird, indem Scherkräfte des Fluids in Kontakt mit der Pumpe verwendet werden.

15. Verfahren nach Anspruch 14, ferner umfassend Messen der Substanz.

16. Verfahren zum Detektieren gemäß Anspruch 14 oder 15, ferner umfassend die Schritte:
Registrieren eines zweiten Werts einer zweiten Detektierungsvorrichtung; und
Generieren eines Ausgabewerts in Abhängigkeit von dem ersten Wert und dem zweiten Wert.

17. Verfahren zum Detektieren nach Anspruch 16, ferner umfassend Eingeben eines zweiten Fluids, das frei von der Substanz ist, in die zweite Detektierungsvorrichtung.

18. Verfahren zum Detektieren nach Anspruch 16 oder 17, wobei die ersten und zweiten Werte Frequenzen sind und der Generierungsschritt Mischen der Frequenzen umfasst, und wobei der Ausgabewert eine Frequenz ist, die die Differenz der Frequenzen umfasst, die durch das Mischen erhalten wurden.

19. Verfahren zum Detektieren nach einem der Ansprüche 14-18, wobei die Probe aus einer Spritze erhalten wird.

20. Verfahren zum Detektieren nach einem der Ansprüche 14-19, ferner umfassend den Schritt des Entsorgens der Detektierungsvorrichtung nach der Detektierung.

21. Verfahren zum Detektieren nach einem der Ansprüche 14-20, ferner umfassend den Schritt des Detektierens von Quecksilber.

22. Verfahren zum Detektieren nach einem der Ansprüche 14-21, ferner umfassend den Schritt des Detektierens einer Vielzahl unterschiedlicher Substanzen.

## Revendications

1. Dispositif de détection (100) pour une substance dans un fluide, comprenant un corps (102) comprenant une cavité (104),
un capteur (106) positionné dans ladite cavité (104),
une première et une deuxième conduite (108, 110) raccordées à ladite cavité (104),
une troisième conduite (112) raccordant lesdites première et deuxième conduites (108, 110) de telle sorte que ladite première conduite (108), ladite cavité (104), ladite deuxième conduite (110) et ladite troisième conduite (112) forment une première boucle,
et une quatrième conduite (114) raccordant lesdites première et deuxième conduites (108, 110) de telle sorte que ladite première conduite (108), ladite cavité (104), ladite deuxième conduite (110) et ladite quatrième conduite (114) forment une deuxième boucle,
dans lequel des vannes (116, 118) sont disposées pour diriger un écoulement dudit fluide par ladite première boucle ou ladite deuxième boucle, et
une pompe (124) servant à fournir ledit écoulement dudit fluide,
**caractérisé en ce que**
ladite pompe (124), qui est un cylindre tournant autour de son axe, utilise des forces de cisaillement du fluide en contact avec la pompe pour fournir ledit écoulement.

2. Dispositif de détection (100) selon la revendication 1, dans lequel ladite quatrième conduite (114) comprend une entrée (120) pour faire entrer des échantillons.

3. Dispositif de détection selon la revendication 1, dans lequel ladite quatrième conduite (114) comprend une sortie (122) pour le fluide en excès.

4. Dispositif de détection (100) selon la revendication 1, dans lequel ladite pompe (124) comprend un cylindre (130) positionné de telle sorte qu'une partie dudit cylindre (130) est positionnée dans une desdites première et deuxième conduites (108, 110), un axe (132) dudit cylindre (130) étant perpendiculaire à ladite conduite (108, 110).

5. Dispositif de détection (100) selon l'une quelconque des revendications 1 à 4, dans lequel ledit capteur (106) est un capteur à microbalance à cristal.

6. Dispositif de détection (100) selon l'une quelconque des revendications 1 à 5, configuré pour mesurer ladite substance.

7. Dispositif de détection (100) selon l'une quelconque des revendications 1 à 6, configuré pour être jetable.

8. Dispositif de détection (100) selon l'une quelconque des revendications 1 à 7, dans lequel ledit capteur (106) est sensible au mercure.

9. Dispositif de détection (100) selon l'une quelconque des revendications 1 à 8, comprenant une pluralité de capteurs (106), chacun desdits capteurs (106) étant configuré pour détecter une certaine substance.

10. Système de détection (600) pour des substances dans un fluide, comprenant un dispositif de détection (602) selon l'une quelconque des revendications 1 à 9, un circuit de pilotage (604) pour ledit dispositif de détection (602), et une unité de traitement (606).

11. Système de détection (700) selon la revendication 10, comprenant une pluralité de dispositifs de détection (702, 706), chacun desdits dispositifs de détection étant sensible à différentes substances.

12. Système de détection selon l'une quelconque des revendications 10 et 11, dans lequel ledit dispositif de détection comprend une pluralité de capteurs, chacun sensible à une certaine substance.

13. Système de détection selon l'une quelconque des revendications 10 à 12, dans lequel ledit dispositif de détection est sensible au mercure.

14. Procédé de détection d'une substance dans des échantillons de fluide dans un dispositif de détection (100) comprenant un corps (102) comprenant une cavité (104), un capteur (106) positionné dans ladite cavité (104), une première et une deuxième conduite (108, 110) raccordées à ladite cavité (104), une troisième conduite (112) raccordant lesdites première et deuxième conduites (108, 110) de telle sorte que ladite première conduite (108), ladite cavité (104), ladite deuxième conduite (110) et ladite troisième conduite (112) forment une première boucle, et une quatrième conduite (114) raccordant lesdites première et deuxième conduites (108, 110) de telle sorte que ladite première conduite (108), ladite cavité (104), ladite deuxième conduite (110) et ladite quatrième conduite (114) forment une deuxième boucle,
des vannes (116, 118) étant disposées pour diriger un écoulement dudit fluide par ladite première boucle ou ladite deuxième boucle, et
une pompe (124) servant à fournir ledit écoulement dudit fluide,
ladite quatrième conduite comprenant une entrée (120) pour faire entrer des échantillons,
comprenant les étapes consistant à :
faire circuler (802) un fluide par ladite première boucle en dirigeant ledit écoulement avec lesdites vannes ;
recevoir (804) un échantillon par ladite entrée ;
rediriger (806) ledit écoulement avec lesdites vannes de manière à faire circuler le fluide par ladite deuxième boucle ; et
enregistrer (808) une valeur dudit capteur,
**caractérisé par**
la fourniture, par ladite pompe, qui est un cylindre tournant autour de son axe, dudit écoulement dudit fluide en utilisant des forces de cisaillement du fluide en contact avec ladite pompe.

15. Procédé selon la revendication 14, comprenant en outre la mesure de ladite substance.

16. Procédé de détection selon la revendication 14 ou 15, comprenant en outre les étapes consistant à :
enregistrer une deuxième valeur d'un deuxième dispositif de détection ; et
générer une valeur de sortie dépendant de ladite première valeur et de ladite deuxième valeur.

17. Procédé de détection selon la revendication 16, comprenant en outre l'entrée d'un deuxième fluide dépourvu de ladite substance dans ledit deuxième dispositif de détection.

18. Procédé de détection selon la revendication 16 ou 17, dans lequel lesdites première et deuxième valeurs sont des fréquences et ladite étape de génération comprend le mélange desdites fréquences, et ladite valeur de sortie est une fréquence comprenant la différence des fréquences obtenue par ledit mélange.

19. Procédé de détection selon l'une quelconque des revendications 14 à 18, dans lequel ledit échantillon est reçu depuis une seringue.

20. Procédé de détection selon l'une quelconque des revendications 14 à 19, comprenant en outre l'étape consistant à jeter ledit dispositif de détection après détection.

21. Procédé de détection selon l'une quelconque des revendications 14 à 20, comprenant en outre l'étape consistant à détecter le mercure.

22. Procédé de détection selon l'une quelconque des revendications 14 à 21, comprenant en outre l'étape consistant à détecter une pluralité de substances différentes.
